# EUROPEAN PATENT APPLICATION

(11) **EP 2 367 260 A1**
(43) Date of publication of application: **21.09.2011**
(21) Application number: 10156711.3
(22) Date of filing: 17.03.2010
(51) Int. Cl.: H02J 7/32, H02J 9/06, G04C 10/00

(54) **Portable communication device**

(71) Applicant: SCI Innovations Limited, 1096 Nicosia (CY)
(72) Inventor: Nielsen, Morten, 1096, Nicosia (CY)
(74) Representative: Langley, Peter James

(57) **Abstract**

The invention relates to a portable electronic communication device (10), such as a mobile telephone, in which operation is possible at least for a short period of time even when the main rechargeable battery (14) of the device is empty.
According to the invention, the above objective is obtained by - in addition to the main rechargeable battery (14) of the device - providing at least one rechargeable back-up battery (16) that is charged by integrated one or more electromechanical generators (22). According to a preferred embodiment, the electromechanical generator (22), which supplied electrical power during movement of the portable electronic communication device (10), comprises an unbalance rotation generator or a linear generator. By these means, the portable electronic communication device (10) can perform its main functions at least for a relatively short period of time, the necessary electronic circuits (12) of the portable electronic communication device (10) during this short period of time receiving the necessary electrical power from the one or more back-up batteries (16) In this short period of time, the main rechargeable battery (14) is disconnected from the electronics (12) of the portable electronic communication device (10).

## Description

### TECHNICAL FIELD

The invention relates generally to portable communication devices and more particularly to methods for providing such devices with power and still more particularly to a mobile telephone that is equipped with an autonomous power source

In the following, the portable communication device, which is the subject-matter of the present invention, will be designated as a mobile telephone. It is, however, understood that this designation also covers other communication devices that are provided by autonomous power sources, such as walkie-talkies, iPods (of the company Apple), smart phones and portable calling devices.

### BACKGROUND OF THE INVENTION

Known mobile telephones have as power source a rechargeable battery located in the housing, which rechargeable battery has to be charged from time to time with the aid of an external power source. The original nickel-metal hydride rechargeable batteries have been replaced in the meantime by lithium-ion rechargeable batteries

Batteries for mobile telephones represent a compromise between opposing demands. On one hand, they are supposed to supply current as long as possible, and, on the other hand, they are supposed to be small and lightweight so that they may be accommodated in the limited housing dimensions of the mobile telephone A typical rechargeable battery in a mobile telephone today has a life (duration of supply of operating voltage in standby mode) of about 120 hours and a duration of operation (with telephone operation) of about 5 hours. These values, which represent only approximations and are constantly being improved be designers, apply at room temperature and are lower at lower temperatures

Despite these substantial power ratings, it happens relatively often that the rechargeable battery is empty when the telephone is needed for communication Usually, this is because the user has forgotten to load the device beforehand, even though all devices today are equipped with a display of the still available battery capacity. Admittedly, this display is imprecise because it is derived from the respective battery voltage, and this voltage does not begin to sink until towards the end of the charge, especially with lithium-ion rechargeable batteries

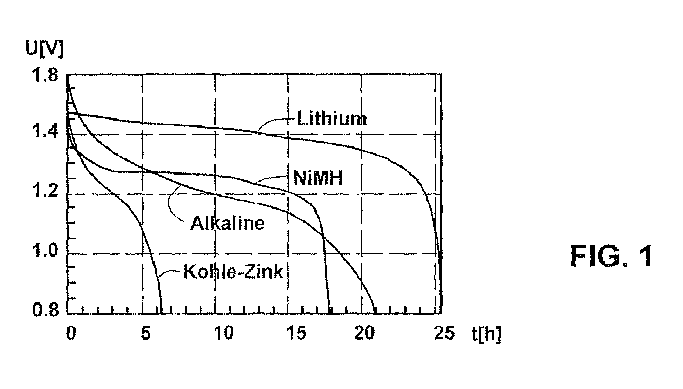

Concerning this subject, figure 1 shows a discharge diagram for rechargeable batteries or other batteries with a constant current discharge at 120 mA for batteries with comparable charging capacity. While the terminal voltage of carbon-zinc rechargeable batteries and alkaline cells, as a first approximation, sinks linearly from 1.4 V to 0.8 V, NiMH and lithium-ion rechargeable batteries supply a practically constant voltage during the first 80 to 90% of the life, and the decline from 1.2 V or 1.35 V, respectively, to 0.8 V occurs only during the last 10 to 20% of the life. Thus, it is no wonder that, as a rule, a rechargeable battery warning comes too late to be able to recharge the rechargeable battery.

This drawback of known mobile telephones, which is also to be found in devices charged by solar cells, can be very annoying to the user and even life-threatening in emergency situations. A mobile telephone whose rechargeable battery is empty is useless in situations where an urgent need to use the telephone arises, such as in emergency situations, in which the summoning of help can be life-saving

German utility model No. DE 20 2005 008 566 U1 discloses the automatic recharging of a cell phone rechargeable battery; the technical problem of the invention and its solution are however neither described nor hinted at.

### SUMMARY OF THE INVENTION

On the above background it is an object of the present invention to provide a mobile telephone that can always be used at least for relative short calls even when the rechargeable battery of the mobile telephone is empty, multiple calls extending over long periods of time also being possible. By short calls, not only simple, merely transmitted messages are understood but full-fledged, interactive calls with a connection partner are also made possible according to the invention.

At least the above objective is achieved by the mobile device and the corresponding power supply method according to the invention as defined by the independent claims Special embodiments of the device and method according to the invention are defined by the dependent claims.

The fundamental idea of the invention can be seen in the provision in the mobile device not only of the main rechargeable battery but also of the provision of at least one rechargeable back-up battery that can relatively quickly be charged to a charge sufficiently large to drive the device for a shorter period of time.

The precise nature of the one or more rechargeable back-up battery/batteries is not critical. A back-up battery for use according to the invention can be a miniaturized version of the main rechargeable battery, that is a NiMH or lithium ion rechargeable battery, but it can also be a super-capacitor (known per se), i.e. a double-layer capacitor, which distinguishes itself by a high energy density

In general, the size of the back-up rechargeable battery should be selected such that its functioning is ensured without it taking up too much room in the device. Since it can be continuously recharged during operation, a size representing 10 to 20% of the main rechargeable battery suffices, as a rule, expressed as energy density value (Wh/g).

It is a fundamental concept of the invention that an energy source that will always be available to a user of the device is used for providing electric power to the electronic circuits of the device, at least for one or more relatively short periods of time.

According to a first aspect of the invention, there is provided a portable communication device, which is equipped with a first rechargeable battery, which makes possible operation of the device independently of the power supply network, where the device is further provided with one or more rechargeable back-up batteries, which is/are charged by one or more generator means associated with the device, which one or more generator supplies current during movement of the device and/or of user-accessible means on the device, and where said one or more rechargeable back-up batteries make possible auxiliary operation of the device even with insufficiently charged first rechargeable battery.

According to a preferred embodiment of the invention, said generator means is at least one electromechanical generator.

According to a preferred embodiment of the invention, said user-accessible means is a crown member (as known from watches) provided on an outer surface of the device in operative engagement with the one or more generator means in the device.

According to a second aspect of the invention, there is provided a method of providing auxiliary operation in a portable communication device that can function in at least a main mode and an auxiliary mode when the main rechargeable power supply of the device has insufficient charge to allow the device to function in said main mode and in said auxiliary mode, the method comprising:
(i) additionally to said main rechargeable battery providing the device with at least one storage means for electrical energy of such a capacity that it is able to drive the device in said auxiliary mode;
(ii) providing the device with at least one generator means for converting kinetic energy into electrical energy;
(iii) supplying kinetic energy to said at least one generator;
(iv) storing the electrical energy generated in said at least one generator means in said storage means for electrical energy; and
providing stored electrical energy from said storage means to the device, whereby the device can perform said auxiliary operation.

According to a preferred embodiment, said storage means for electrical energy is a rechargeable battery. Other storage means would, however, also be possible and would fall within the scope of protection of the present invention. As mentioned above, one such storage means could be a super-capacitor being able to store sufficient energy to enable the device to operate in the auxiliary mode at least for a short period of time.

The built-in power generator for charging the back-up rechargeable battery is according to a preferred embodiment of the invention a mechanical-electrical generator that converts mechanical energy to electrical energy when the device is being moved, the electrical energy derived in this manner being used for driving the electronic circuitry of the device.

The built-in generator is preferably disposed as far from the centre of the device as possible so that during its involuntary movement an amplitude as great as possible is achieved. As the mechanical part of the generator, a self-winding mechanism can be used, which is known as a part of automatic mechanical watches in which a spring is wound in small steps by a rotor during arm movements of the wearer. The rotor, which usually has ball bearings, stands still during movements of the watchcase, owing to its inertia and the force of gravity. A torque is hereby exerted on the winding mechanism. The spring is typically wound in both rotational directions (bi-directionally). If the rotational movement of the case lies in the axis of the rotor, then the principle is based alone on the moment of inertia of the rotor. In the case of rotational movements perpendicular to the axis of the rotor, the eccentricity thereof has an effect. The rotor is usually the only semicircular shape; thus its centre of gravity does not coincide with its axis If the watch is turned only slightly out of the horizontal, this possibly suffices for a 180-degree rotation of the rotor.

This technology known from watch-making may be utilized for providing a mechanically operated charging device for the rechargeable back-up battery used in the device and method according to the invention by adding a generator, preferably composed of coil, permanent magnet and commutator rectifier Details of a charging generator constructed in this manner will not be given here. A person skilled in the art will be able to construct such a generator, and such a generator is used in the so-called automatic quartz watches (Seiko Kinetic, ETA Autoquarz).

Another possibility for a mechanically operated charging generator is disclosed in US 6,220,719 B1 and in US patent application No. US 2003/0197433 A1. These documents disclose the application of electromotive linear generators, in which at least one permanent magnet can move linearly in both directions inside at least one coil. With this movement, electrical current is produced according to the Faraday principle.

As a preferable additional measure, the invention provides for covering the electromechanical charging generator for the rechargeable back-up battery or batteries with a transparent material forming a window portion, through which the generator becomes visible from outside. This provides the additional advantage that the proper functioning of the generator can be visually monitored by the user.

The internal circuitry for the rechargeable batteries inside the mobile telephone can be configured in such a manner that, with attachment of an external charging source, both (or all) rechargeable batteries are charged in series or only the main rechargeable battery is recharged by the external source. Moreover, a switch operable from outside can be provided, which switches on and off the auxiliary function provided by the one or more back-up batteries, when this function is needed due to low voltage on the main battery.

### BRIEF DESCRIPTION OF THE DRAWINGS

The invention will be better understood by reading the following detailed description of a specific embodiment of the invention in conjunction with the attached figures, where:
Figure 1 shows terminal voltage as a function of time for a number of typical batteries;
Figure 2 shows a schematic block diagram of the main components inside a mobile telephone according to an embodiment of the invention;
Figure 3 shows the basic functional principle of an embodiment of a mobile telephone according to the invention; and
Figure 4 shows a schematic perspective view of a mechanical generator system used according to an embodiment of the invention.

### DETAILED DESCRIPTION OF THE INVENTION

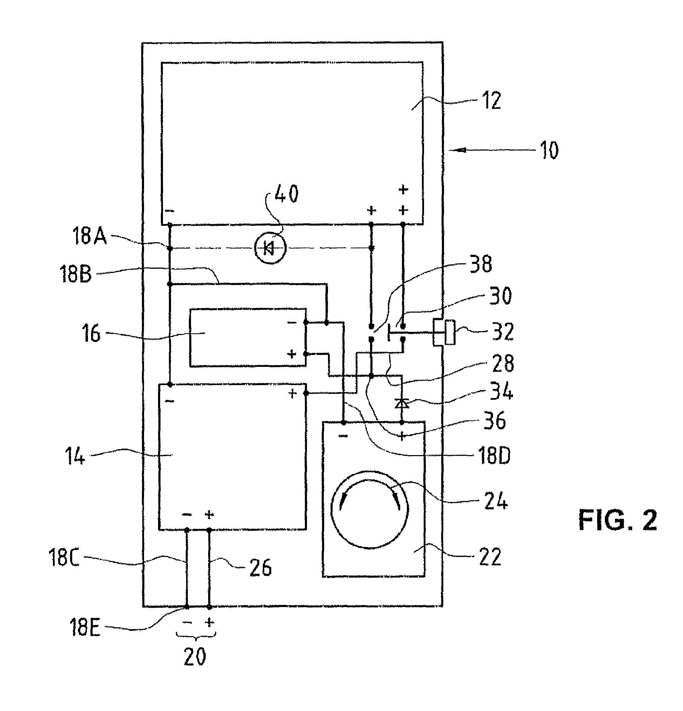

With reference to the drawings, figure 2 shows a schematic block diagram of the main components inside a mobile telephone according to an embodiment of the invention comprising the conventional components of a mobile telephone, i.e. a keypad, an antenna, a display screen, a slot for a SIM card, a microphone, a loudspeaker, etc. These conventional components are not shown in figure 2.

Referring to figure 2, electronics 12, including all circuit elements necessary for operation of the telephone, are integrated at the appropriate place in the telephone apparatus. The figure furthermore shows a main rechargeable battery 14 and a rechargeable back-up battery 16. The lines 18A to 18D connect the minus pole of the two rechargeable batteries 14 and 16 to the minus terminal of the electronics 12 and the minus pole 18E of the charging socket 20, with the aid of which the main rechargeable battery 14 can be charged by an external charging device (not shown).

Disposed in the lower right-hand corner region of the telephone apparatus 10 as shown in figure 2 is an electromechanical generator 22 for charging the rechargeable back-up battery 16. Of course any other desired installation location may be chosen. The generator 22 is shown schematically in figure 2 as an unbalance rotation generator with an oscillating weight capable of rotation in the direction of the double arrow 24 (As mentioned above, a linear generator, for example, can also be used).

As is common in mobile telephones, the main rechargeable battery 14 is connected via a line 18C, 26 to the charging connector 20, which enables the charging of the main rechargeable battery 14 from outside by means of a charging device which is plugged into the connector 20. From the main rechargeable battery 14, a single-wired line 28 leads to a first contact level (switch level) 30 of a press switch 32, whose inoperative position corresponds to the position drawn, in which the first contact level 30 is connected to the ++ pole of the electronics 12. Assigned to this ++ pole are all functions for which the telephone apparatus is designed, and which allow themselves also to be activated accordingly. This mode of operation, i.e. normal operation, also requires the most electrical power.

The plus pole of the electromechanical generator 22 is connected, on the one hand, via a free-wheeling diode 34 and the line 36 to the plus pole of the rechargeable back-up battery 16, and, on the other hand, via the second switching level 38 of the press switch 32, to the + pole of the electronics 12. The back-up battery 16 can thereby be constantly charged when the device 10 is moved (whereby the electromechanical generator 22 supplies current), but it is not in connection with the telephone electronics 12.

When the switch 32 is pressed, in order to commence the auxiliary operation of the mobile telephone when the main rechargeable battery 14 is empty, the main rechargeable battery 14 is separated from the ++ pole of the electronics 12 by operating the contacts 30 and instead, the rechargeable back-up battery 16 is connected to the + pole of the electronics 12 via the closed contacts 38. In the electronics 12, only those functions that are necessary for auxiliary operation are connected to the + pole, and superfluous functions are switched off. The electronics 12 therefore consume less electrical power, and the rechargeable back-up battery can maintain the auxiliary operation for a longer period of time

It is possible to provide the press switch 32 with a lock-in function so that the auxiliary operation is switched on continuously. In this case, a display of the switches-on auxiliary operation is preferred, for instance through a miniature LED (indicated by broken lines in figure 2 without a possibly needed current-limiting resistor, and designated by 40), so that the switching off of the auxiliary operation is not forgotten.

During the auxiliary operation it is possible, through constant movement of the device 10, to maintain the charging state of the rechargeable back-up battery 16 and to prolong the call duration possible in this state.

The invention has been explained by describing an embodiment of the inventive subject-matter. The scope is not thereby limited, Numerous additions, changes and further developments are possible within the context of the claimed subject-matter. For example, instead of the switch 32 or in addition to this switch, auxiliary operation can be automatically switched on (and switched off again) by dialling a predetermined number associated with the electronics 12 However, such a feature requires sufficient residual charge in the main rechargeable battery 14 Furthermore, a display of the charged state of the rechargeable back-up battery can also be provided on the display of the device, besides the already existing display of the amount of charge in the main rechargeable battery

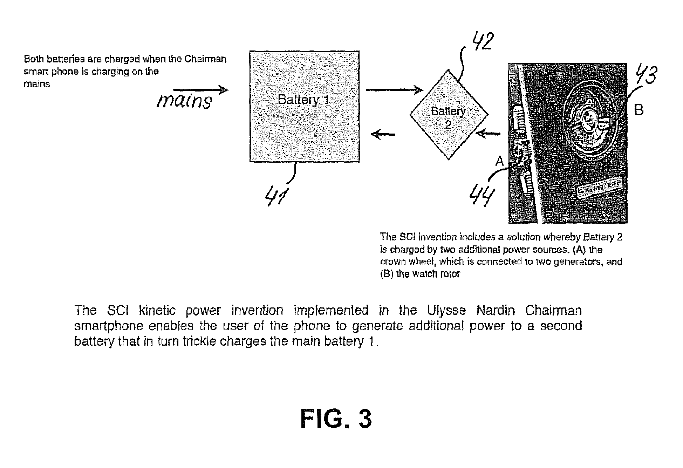

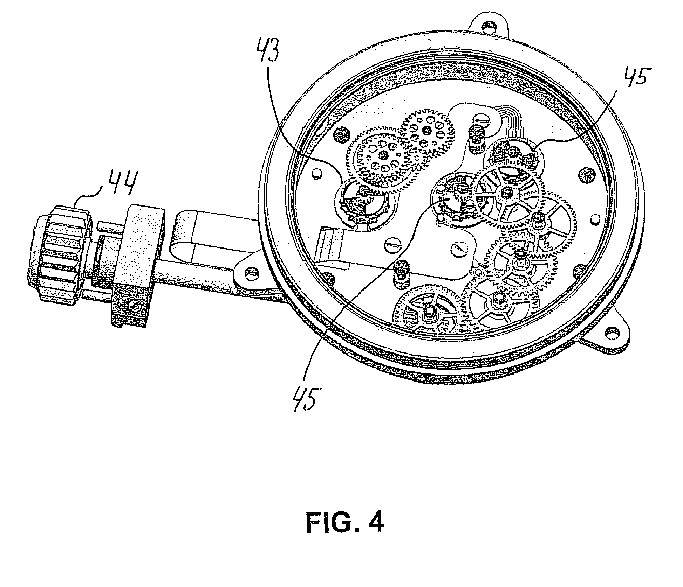

Figures 3 and 4 describe in detail a specific embodiment of a device according to the invention.

Figure 3 shows the basic functional principle of an embodiment of a mobile telephone according to the invention According to this embodiment, both the first (main) rechargeable battery 41 and the rechargeable back-up battery 42 are charged when the device is charging on the mains. Furthermore, the rechargeable back-up battery 42 is charged from two additional power sources: (i) the watch rotor 43 and the crown wheel 44 Thus, by applying the principles of the invention, the user of the device can generate additional power to the back-up battery that in turn trickle charges the main rechargeable battery 41.

Figure 4 shows a schematic perspective view of a mechanical generator system used according to an embodiment of the invention The figure shows the watch rotor micro generator 43 and two micro generators 45 that via the gear wheel transmission 46 are connected to the crown 44 located on an outer surface of the device

The generator system according to this specific embodiment comprises three [SCI MG4 0] micro generators The excenter weight drives one micro generator 43 through a gearing with a spring so that every movement of the excenter weight is accumulated in the spring and when the spring is fully winded, its mechanical energy is released by driving the micro generator to a speed that is high enough to charge a rechargeable battery. The other two micro generators 45 are driven by the crown 44 through a gear train 46. The two micro generators 45 have a phase shift, so that the turning direction of the crown 44 can be detected The turning speed of the crown is proportional to the frequency of the generated AC voltage Thereby, turning of the crown generates energy by means of the two micro generators and at the same time it can be used for scrolling functions, up and down, slow and quick.

Below fallows an explanation of the main features of the micro generator system used in this embodiment of the invention:

### (1) Micro generator.

The micro generator consists of a 14-pole resin bonded Sn₂Co₁₇ magnet and a claw pole stator that encloses a coil with 1140 windings and a resistance of 320 Ω. The diameter of the micro generator is 4 mm and the height of the generator is 2.2 mm.

Each complete rotation of the magnet in the stator induces an AC voltage with 7 sine waves The amplitude of the AC voltage is proportional to the speed of the turning magnet. At a rotational speed of 5000 rpm, an AC voltage with an amplitude of 2.6 V and a frequency of 580 Hz is generated.

### (2) Excenter weight.

The excenter weight is mounted on a ball bearing with a gear. This gear drives two mechanical rectifiers. One of the mechanical rectifiers has got a spring barrel. The gear on the spring barrel drives the generator. The spring will unwind as soon as a torque is reached, which is higher than the holding torque of the micro generator, Each time that the spring unwinds, the magnet of the micro generator is driven to a rotational speed of at least 5000 rpm during a short period.

### (3) Crown.

The generator system according to this embodiment of the invention has two micro generators that are simultaneously driven by the turning of a crown through a gear train. The frequency of the generated AC voltage is proportional to the turning speed of the crown. The two generators have a phase shift, enabling the determination of the turning direction by the phase shift between the AC voltage of generators 1 and 2. In this way, the turning of the crown can be used to perform scrolling actions and charge the back-up battery at the same time.

The basic operation of this embodiment of the invention is illustrated with reference to figure 3.

Both batteries (the main battery 41 and the back-up battery 42) are charged when the mobile telephone according to the present invention is charging from the mains power supply According to the teachings of the present invention, the back-up battery 42 is charged by two additional power sources, i.e. the crown wheel 44 and the watch rotor generators 43. Thus, applying the teachings of the present invention, the user of the mobile telephone (or other electronic communication device) is able to generate additional electrical power to the back-up battery 42 that in turn trickle charges the main battery 41.

## Claims

1. A portable communication device (10), which is equipped with a first rechargeable battery (14), which makes possible operation of the device independently of the power supply network, where the device is further provided with one or more rechargeable back-up batteries (16), which is/are charged by one or more generator means (22) associated with the device (10), which one or more generator (22) supplies current during movement of the device and/or of user-accessible means on the device, and where said one or more rechargeable back-up batteries (16) makes possible auxiliary operation of the device even with insufficiently charged first rechargeable battery (14).

2. A device according to claim 1, wherein the charging capacity of the rechargeable back-up battery (16) corresponds to 10 to 20% of that of the first rechargeable battery (14).

3. A device according to claim 1, wherein said generator means (22) is electromechanical means.

4. A device according to claim 1 or 3, wherein said user-accessible means is a crown member provided on an outer surface of the device in operative engagement with one or more generator means in the device.

5. A device according to claim 3, wherein said electromechanical generator is an unbalance rotation generator, in which an asymmetrically hung, rotationally capable, oscillating weight drives an electrical generator with coil and permanent magnet when the oscillating weight is set in rotation during movement of the device.

6. A device according to claim 3, wherein said electromechanical generator (22) is a linear generator, in which a permanent magnet carries out a linear motion inside a coil when the device is correspondingly moved.

7. A device according to any of the preceding claims, wherein the generator is visible from outside.

8. A device according to any of the preceding claims, wherein a switch (32) is provided, with which the device is switchable from normal operation to auxiliary operation, where the switch (32) in an inoperative position activates the normal operation.

9. A device according to any of the preceding claims, wherein in auxiliary operation only those functions of the device are supported that are necessary for the auxiliary operation

10. A device according to any of the preceding claims, wherein switched-on auxiliary operation is indicated on a display, in particular by means of an LED (40).

11. A device according to claim 9, wherein the state of charge of the one or more back-up battery (16) is shown on a display on the device.

12. A device according to any of the preceding claims, wherein the one or more rechargeable back-up battery (16) is charged simultaneously with the first rechargeable battery (14), when the device is connected to an external charging device.

13. A device according to any preceding claim comprising electronics (12) including circuit elements necessary for the function of the device and a first rechargeable battery (14) that can be charged by external means through a charging connector (20), where the device further comprises at least one rechargeable back-up battery (16) that can be charged from generator means (22) provided in the device, such that movement of the device or movement of user accessible externally provided means on the device will cause charging of said one or more rechargeable back-up batteries, where one pole of the first rechargeable battery (14) and one pole of similar polarity of said one or more rechargeable back-up batteries (16) is connected to the power supply terminal of similar polarity of the electronics (12), the device furthermore comprising a switch (30) configured such that in one setting of the switch (30), the other pole of the first rechargeable battery (14) is connected to the power supply terminal (++) of the electronics (12), through which terminal power must be supplied to the electronics (12) when all functions of the device can be performed by the device, and where the switch (30) is configured such that in a second setting of the switch (30), the first rechargeable battery (14) is disconnected from the (++) power supply terminal of the electronics (12) and connected to a second power supply terminal (+) of the electronics (12), through which second power supply terminal (+) electrical power must be supplied to the electronics (12) for enabling the device to function in an auxiliary mode, wherein only some of the functions of the device can be performed

14. A device according to claim 13, wherein power is supplied from the generator (22) to the one or more rechargeable back-up batteries (16) through a free-wheeling diode (34).

15. A device according to any of the preceding claims, wherein said generator (22) has a watch rotor generator (43) and two micro generators (45) that are simultaneously driven by the turning of a crown (44) through a gear train (46) and where the two generators (45) have a phase shift, enabling the determination of the turning direction by the phase shift between an AC voltage of each of the two micro generators (45), whereby the turning of the crown (44) can be used to perform scrolling actions and charge the rechargeable back-up battery (16) at the same time

16. A device according to any of the preceding claims, wherein both the first rechargeable battery (14) and the one or more rechargeable back-up batteries (16) are charged when the device (1) is charging from the mains power supply.

17. Device according to any of the preceding claims, wherein said device is a mobile telephone

18. A method of providing auxiliary operation in a portable communication device that can function in at least a main mode and an auxiliary mode when the main rechargeable power supply of the device has insufficient charge to allow the device to function in said main mode and in said auxiliary mode, comprising:
(i) additionally to said main rechargeable battery providing the device with at least one storage means for storing electrical energy of such a capacity that it is able to drive the device in said auxiliary mode;
(ii) providing the device with at least one generator means for converting kinetic energy into electrical energy;
(iii) supplying kinetic energy to said at least one generator;
(iv) storing the electrical energy generated in said at least one generator means in said storage means for electrical energy; and
providing stored electrical energy from said storage means to the device, whereby the device can perform said auxiliary operation.

19. A method according to claim 18, wherein said storage means for electrical energy is one or more rechargeable battery.

20. A method according to claim 18 or 19, wherein said generator means is an electromechanical generator comprising an unbalance rotation generator in which an asymmetrically hung, rotationally capable, oscillating weight drives an electrical generator with coil and permanent magnet when the oscillating weight is set in rotation during movement of the device.

21. A method according to claim 18 or 19, wherein said generator comprises a linear generator in which a permanent magnet carries out a linear motion inside a coil when the device is correspondingly moved.
